# FASCICULE DE BREVET EUROPEEN

(11) **EP 3 810 903 B1**
(45) Date de publication et mention de la délivrance du brevet: **12.02.2025**
(21) Numéro de dépôt: 19731293.7
(22) Date de dépôt: 20.06.2019
(51) Int. Cl.: F01D 17/16, F04D 29/56, F04D 29/64

(54) **VIROLE EXTÉRIEURE DE TURBOMACHINE**
FUSSPLATTE EINES TURBINENMOTORS
TURBINE ENGINE OUTER SHROUD

(30) Priorité: 21.06.2018 BE 201805429
(43) Date de publication de la demande: 28.04.2021
(73) Titulaire: Safran Aero Boosters SA, 4041 Herstal (BE)
(72) Inventeur: VYVEY, Morgan, 4400 Flemalle (BE)
(74) Mandataire: Ipsilon Benelux
(86) Numéro de dépôt international: PCT/EP2019/066318
(87) Numéro de publication internationale: WO 2019/243484

(56) Documents cités:
- EP-A1- 0 636 766
- WO-A2-2014/143445
- GB-A- 805 015
- US-A- 3 314 654
- US-A- 4 130 375
- US-A1- 2016 160 675

## Description

### Domaine technique

L'invention concerne le domaine des turbomachines axiales et plus particulièrement les turboréacteurs d'aéronefs. Plus précisément, l'invention concerne un ensemble pour turbomachine axiale, notamment pour turboréacteur d'aéronef, l'ensemble comprenant une rangée annulaire d'aubes statoriques orientables, un dispositif d'actionnement du pivotement des aubes et une virole externe ayant une surface cylindrique formant un siège pour le dispositif d'actionnement.

L'invention a également trait à une turbomachine munis d'un tel ensemble.

### Technique antérieure

Le document US 2016/0160675 décrit une turbomachine axiale avec un agencement particulier des tourillons d'aubes statoriques à orientation variable dans une virole externe de compresseur. Le système d'actionnement de l'orientation des aubes est positionné en aval de chaque aube. Une bielle, notée 80 permet de régler le pivotement des aubes. Cette bielle peut être manipulée par une bague de synchronisation, afin que toutes les aubes d'un étage donné soient orientées de manière identique. La bague de synchronisation est aussi appelée anneau de manœuvre, bague d'actionnement ou bague de commande. Une telle bague peut parfois reposer à même la virole externe.

Une telle conception est possible dans le système du document cité ci-dessus qui comprend plusieurs étages de compression à calage variable avec une virole externe s'étendant sur plusieurs de ces étages. Une telle virole est encombrante. Dans un compresseur avec une plus courte virole ou moins d'étages de compression, un tel mécanisme est inutilement encombrant.

EP 0 636 766 A1, US 4 130 375 A, GB 805 015 A, US 3 314 654 A et WO 2014/143445 A2 divulguent d'autres exemples de dispositifs d'aubes statoriques orientables.

### Résumé de l'invention

### Problème technique

L'invention a pour objectif de résoudre au moins un des problèmes posés par l'art antérieur. L'invention a également pour objectif de proposer une conception plus simple et plus compacte, permettant un montage plus aisé des aubes à orientation variable et du mécanisme d'actionnement de l'orientation. L'invention a également pour objectif de proposer une solution légère.

### Solution technique

L'invention a pour objet un ensemble selon la revendication 1.

Par « virole », on entend une pièce sensiblement de révolution autour d'un axe. Les tronçons axiaux de virole sont des portions d'une virole.

Ainsi, la surface cylindrique entoure les brides et rend l'ensemble plus compact.

Selon des modes avantageux de l'invention, l'ensemble peut comprendre une ou plusieurs des caractéristiques suivantes, prises isolément ou selon toutes les combinaisons techniques possibles :
- La paroi tubulaire et la bride du premier tronçon forment un profil en « T ».
- La paroi tubulaire et la bride du premier tronçon sont venus de matière.
- La bague peut être en contact direct ou indirect avec la surface cylindrique.
- L'ensemble comprend des patins aptes à être fixés à la bague et aptes à venir au contact de la surface cylindrique.
- L'ensemble comprend des manchons comprenant chacun une portion tubulaire pour coopérer avec une tige ou avec la bague, et une portion cylindrique ou rectangulaire pour coopérer avec un patin.
- L'ensemble comprend une pluralité de couples vis-écrous, les brides comprenant des orifices pouvant être traversés par les vis pour maintenir les tronçons entre eux par assemblage vissé.
- Les orifices sont axiaux et tels que, une fois l'ensemble assemblé, les écrous sont parallèles à la surface cylindrique.
- Au moins une de brides et/ou la paroi tubulaire et/ou les tronçons est/sont composés d'un alliage de titane, d'aluminium ou de magnésium et/ou de matériau composite.
- Le premier tronçon est réalisé à partir d'un assemblage de deux demi-tronçons, chacun des demi-tronçons comprenant une rangée annulaire de demi-orifices radiaux semi-cylindriques, les demi-orifices étant agencés pour permettre à chacun des demi-orifices d'un demi-tronçon d'être mis en correspondance axiale et circonférentielle avec un demi-orifice de l'autre demi-tronçon pour former la rangée annulaire d'orifices radiaux.
- Les demi-tronçons sont assemblés à l'aide de brides respectives positionnées circonférentiellement entre deux demi-orifices adjacents, chaque espacement circonférentiel entre deux demi-orifices adjacents contenant une des brides.
- Les brides sont des flancs s'étendant perpendiculairement à l'axe de symétrie de la virole et ayant une épaisseur axiale, la surface cylindrique s'étendant axialement sur une longueur de plus de trois fois la somme des épaisseurs axiales des deux brides.

L'invention porte également sur une turbomachine axiale, notamment un turboréacteur d'aéronef, avec un compresseur basse-pression, un compresseur haute-pression et une veine intermédiaire entre le compresseur basse-pression et le compresseur haute-pression, remarquable en ce que le compresseur basse-pression, la veine intermédiaire et/ou le compresseur haute-pression comprend/comprennent un ensemble tel que décrit ci-dessus.

Dans un mode de réalisation non revendiqué est défini un procédé d'assemblage d'un tel ensemble à l'aide d'un tel kit, le procédé comprenant les étapes suivantes : l'introduction des têtes des aubes dans les orifices radiaux du premier tronçon ; l'assemblage des patins, des tiges et des bielles à la bague ; l'assemblage d'une bielle de manœuvre à la tête de chaque aube ; la fixation, préférentiellement par vissage, des brides des deux tronçons entre elles.

Selon un mode avantageux, le procédé comprend une étape d'assemblage des demi-tronçons réalisée après l'étape d'assemblage des bielles aux aubes.

### Avantages apportés

L'invention propose une géométrie spécifique qui est particulièrement compacte. De plus, le positionnement de la surface cylindrique au-dessus des brides permet une bonne rigidité du siège du dispositif d'actionnement.

### Brève description des dessins

Les figures 1A et 1B représentent une turbomachine axiale ;
La figure 2 est un schéma d'un compresseur de turbomachine selon l'état de la technique ;
Les figures 3 et 4 montrent respectivement un compresseur avec une virole et une partie agrandie de la virole, selon l'invention ;
La figure 5 illustre un manchon qui peut être utilisé dans l'ensemble selon l'invention ;
La figure 6 est une coupe d'une aube avec une bielle monobloc utilisée dans un second mode de réalisation de l'invention ;
La figure 7 est une vue isométrique partielle du premier tronçon dans ce deuxième mode de réalisation.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

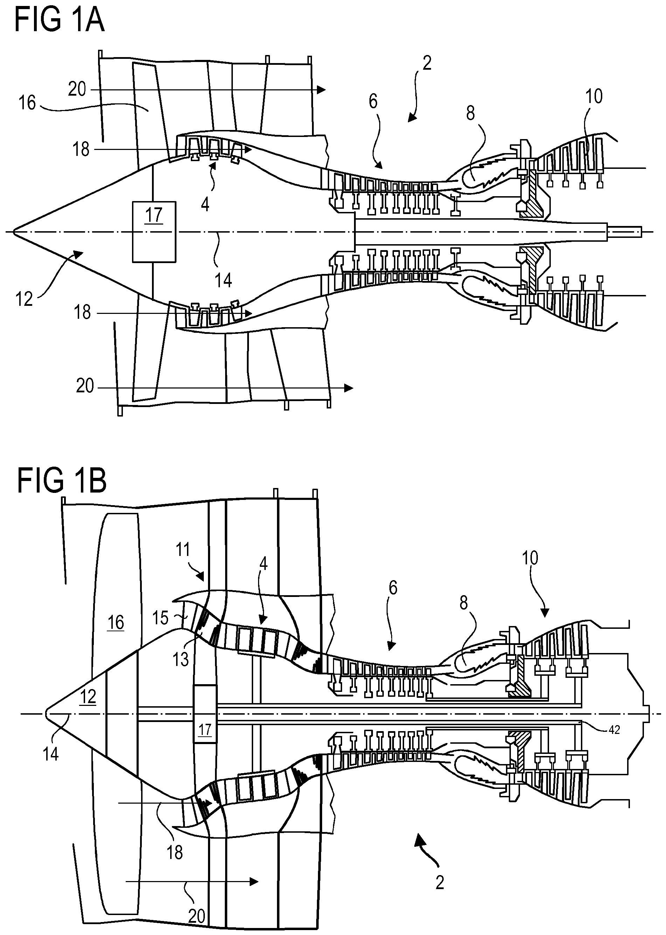

La figure 1A représente de manière simplifiée une turbomachine axiale. Il s'agit ici d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 via un train d'engrenage 17, et génère un flux d'air qui se divise en un flux primaire 18 traversant les différents niveaux susmentionnés de la turbomachine, et en un flux secondaire 20 traversant un conduit annulaire (partiellement représenté) le long de la machine pour ensuite rejoindre le flux primaire en sortie de turbine.

Le flux secondaire peut être accéléré de sorte à générer une réaction de poussée nécessaire au vol d'un avion. Les flux primaire 18 et secondaire 20 sont des flux annulaires coaxiaux et emmanchés l'un dans l'autre.

La figure 1B représente une turbomachine axiale 2 avec une architecture alternative à celle de la figure 1A. Les mêmes numéros de référence représentent les mêmes éléments. La différence entre les deux architectures est la présence d'un carter 11 portant le réducteur 17, notamment via des bras radiaux (dits « struts ») 13. Les bras radiaux 13 peuvent être directement en aval d'une rangée d'aubes statoriques 15.

Dans la suite, le mode de réalisation illustré est en rapport avec l'architecture de la figure 1A mais toutes les caractéristiques techniques de l'invention peuvent également être prévue sur une turbomachine avec une architecture selon la figure 1B.

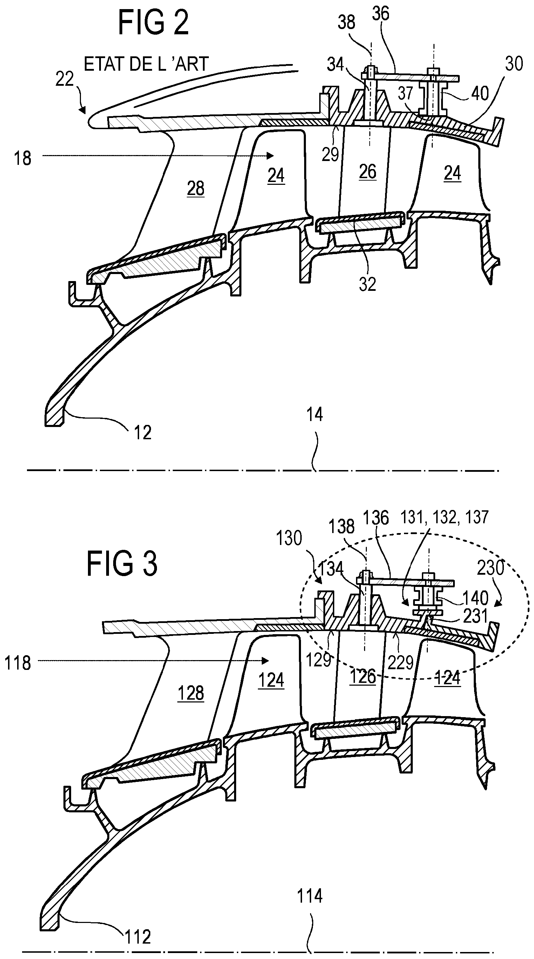

La figure 2 est une vue en coupe d'un compresseur d'une turbomachine axiale telle que celle de la figure 1, avec une virole externe selon l'état de l'art. Le compresseur peut être un compresseur basse-pression 4. Le rotor 12 comprend plusieurs rangées d'aubes rotoriques 24. Il peut être constitué d'un tambour monobloc aubagé ou de disques aubagés monoblocs. Alternativement il peut comprendre des aubes à fixation par queue d'aronde.

Le compresseur basse-pression 4 comprend plusieurs redresseurs, par exemple quatre, qui contiennent chacun une rangée d'aubes statoriques 26. Certaines aubes statoriques peuvent être à orientation réglable, également appelé aubes à calage variable. Les redresseurs sont associés respectivement à une rangée d'aubes rotoriques pour redresser le flux d'air, de sorte à convertir la vitesse du flux en pression, notamment en pression statique.

Un bec 22 qui peut avoir des fonctions de dégivrage peut être monté sur un carter qui supporte une rangée d'aubes statoriques d'entrée 28.

Les aubes statoriques 26 s'étendent essentiellement radialement depuis une virole externe 30 vers des anneaux internes 32. Les aubes 26 peuvent être fixées à la virole externe 30 à l'aide d'axes ou tourillons 34. La virole 30 définit une surface interne 29 qui guide le flux de gaz. Le compresseur peut comporter plusieurs tronçons axiaux adjacents pour former la virole 30.

Dans cet exemple, le tourillon 34 est entraîné en pivotement par une bielle 36 autour de l'axe 38 du tourillon 34. La bielle 36 est solidaire du tourillon 34, fixée par exemple par un écrou.

Les bielles de la rangée annulaire d'aubes 26 sont toutes reliées à une bague de synchronisation 40 au moyen de tiges 42.

La bague 40 repose sur une surface cylindrique ou conique 37.

La figure 3 représente partiellement le compresseur assemblé à partir d'un ensemble selon l'invention. Les numéros sont incrémentés de 100 pour désigner des caractéristiques techniques correspondant à celles de la figure 2.

En comparaison de la figure 2, la virole de l'invention comprend un premier tronçon 130 et un second tronçon 230. Les tronçons décrivent une surface interne de guidage du flux de gaz 129, 229. Les tronçons comprennent des brides respectives 131, 231 mises en regard pour assembler le compresseur.

Le premier tronçon 130 dispose d'une paroi tubulaire 132 définissant une surface externe cylindrique 137.

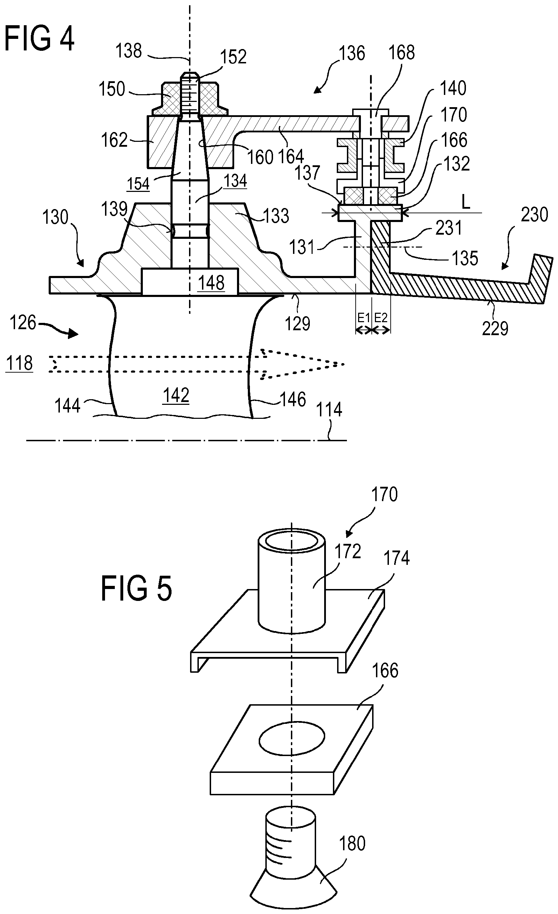

Plus de détails à ce sujet sont donnés sur la figure 4 qui est un agrandissement de la zone de la figure 3 entourée en pointillés.

L'aube 126 comprend une pale 142 présentant un bord d'attaque 144 et un bord de fuite 146. La tête de l'aube 126 peut comprendre un épaulement 148 pour le centrage et la mise en position de l'aube 126 dans la virole 130 ainsi qu'une gorge pour recevoir un joint d'étanchéité. La bielle 136 de manœuvre du pivotement de l'aube est fixée par un écrou 150 sur une portion filetée 152 de la tête de l'aube. Un chanfrein de centrage 154 peut être prévu à l'extrémité du tourillon 134.

La tête de l'aube est reçue au droit d'une surépaisseur de la virole 130, qui peut être sous la forme d'un bossage 133.

La bielle 136 peut comprendre un orifice conique 160 correspondant au chanfrein 154, un corps 162 et une patte 164. L'orifice 160 peut comprendre une rainure pour recevoir une clavette et ainsi rendre solidaire en rotation l'aube 126 et la bielle 136.

Dans cet exemple, la paroi tubulaire 132 est venue de matière avec la bride 131. Ceux-ci forment ensemble un profil en « T ». Alternativement, la paroi tubulaire peut être radialement distante de la bride.

Un axe 135 schématise la jonction entre les brides 131, 231 qui peut être faite par éléments vissés.

La surface cylindrique 137 fait office de support pour des patins 166 portés par la bague 140.

Une tige 168 assure la liaison entre la bielle 136 et la bague 140. Un manchon 170 assure la connexion des patins 166 à la tige 168 et/ou à la bague 140.

La bague 140 se présente sous la forme d'un anneau plein ou de deux demi-anneaux, avec une pluralité d'orifices radiaux pénétrés par les tiges 168. Ces orifices peuvent être filetés.

La bague 140 peut présenter des gorges annulaires sur sa face amont et aval afin d'optimiser son poids sans compromettre sa rigidité.

La bague de synchronisation 140 coopère avec autant de tiges 168 que de bielles 136 réparties annulairement. La bague 140 peut être actionnée en pivotement autour de l'axe 114 par des moyens appropriés comme par exemple une roue dentée coopérant avec une crémaillère prévue sur la bague 140. La crémaillère peut être logée dans une des gorges de la bague 140. Le pivotement de la bague 140 entraîne un déplacement correspondant des tiges 168 le long de la surface 137 et celles-ci font ainsi pivoter les bielles 136 et les aubes 126 autour de leurs axes 138.

Les patins 166 peuvent être directement connectés à la bague 140 ou à la tige 168.

Alternativement, un manchon intermédiaire 170 peut être prévu pour chaque tige 168 et chaque patin 166.

Le manchon 170 est décrit sur la figure 5. Celui-ci comprend une portion tubulaire 172 qui peut être filetée à l'extérieure pour être insérée dans la bague 140 et/ou à l'intérieur pour recevoir la tige 168. Le manchon comprend également une portion rectangulaire 174 qui permet de maintenir le patin 166 par collage, frettage ou vissage - par exemple à l'aide d'une vis fraisée 180 insérée par en-dessous et dont la tête sera noyée dans le patin 166. La portion 174 peut alternativement être cylindrique pour accueillir un patin cylindrique.

Dans l'exemple des figures 4 et 5, la virole externe 130 présente un orifice 139 recevant le tourillon 134. Le tourillon 134 est inséré dans l'orifice 139 par le bas (dans le sens de la figure 4), puis la bielle 136 est vissée à l'aide du filet 52.

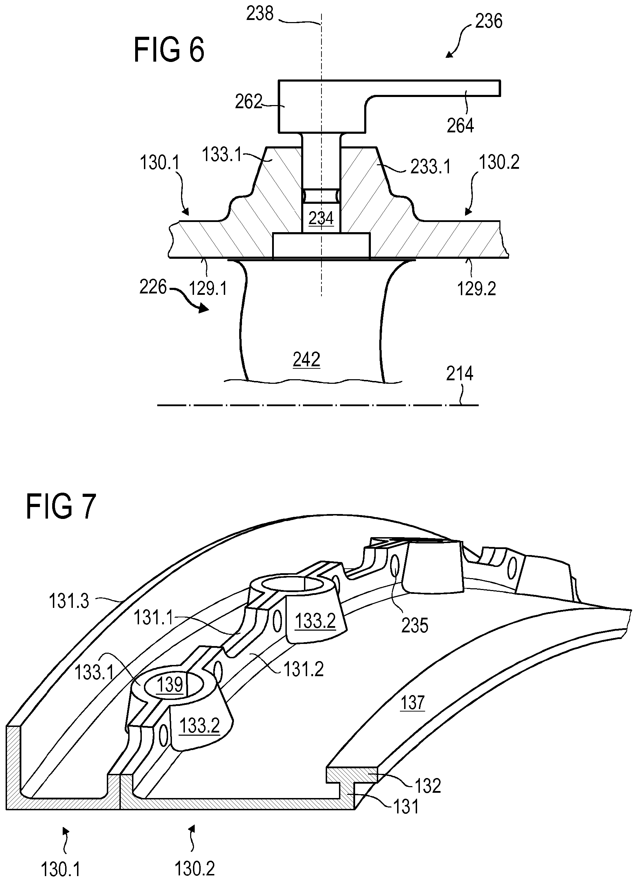

Les figures 6 et 7 montrent un agencement différent. Celles-ci sont décrites ensemble dans les paragraphes qui suivent. Les numéros de références de l'aube et de la bielle sont indexés de 100 par rapport au mode de réalisation des figures 3 à 5.

L'aube 226 est monobloc avec la bielle 236 et l'orifice de la virole 130 recevant le tourillon 234 est fait de deux demi-orifices (139.1, 139.2 sur la figure 7).

Deux demi-tronçons 130.1 et 130.2 forment la virole 130. Chacun des demi-tronçons 130.1, 130.2 comprend une paroi tubulaire définissant une surface interne de guidage 129.1, 129.2 et une série annulaire de demi-orifices 139.1, 139.2, formés dans des demi-bossages 133.1, 133.2. Les deux demi-orifices 139.1, 139.2 forment l'orifice 139 qui reçoit le tourillon 234 de l'aube 226. Les deux demi-tronçons 130.1, 130.2 sont assemblés via des éléments vissés qui maintiennent deux brides 131.1, 131.2 adjacentes ensemble. Les brides 131.1, 131.2 peuvent s'étendre d'un bossage au bossage voisin circonférentiellement. La bielle 236 est venue de matière avec la tête de l'aube. Par exemple, la bielle peut être forgée ou moulée avec le reste de l'aube. Les surfaces fonctionnelles (tourillon, extrados/intrados) sont ensuite usinées. Alternativement, un assemblage soudé peut être réalisé. Ceci est effectué avant le montage de l'aube dans la virole. Comme l'orifice 139 résulte de la combinaison des deux demi-tronçons 130.1, 130.2, le tourillon 234 peut être positionné dans un demi-orifice 139.1, 139.2 du demi-tronçon 130.1 malgré la dimension de la bielle qui est supérieure au diamètre de l'orifice 139, puis l'autre demi-tronçon 130.2 est fixé pour enserrer le tourillon 234 dans l'orifice 139. La bague de synchronisation munie de ses patins peut être montée sur le second tronçon de virole avant que les aubes ne soient montées dans les demi-orifices 139.1, 139.2.

La figure 7 représente une vue partielle isométrique de la virole 130 de ce deuxième mode de réalisation. On y voit notamment quelques-uns des bossages 133.1, 133.2 ainsi que des brides 131.1, 131.2 et leurs trous d'assemblage (seuls les trous 235 du demi-tronçon aval 130.2 sont visibles). Les brides peuvent relier complètement chacun des bossages 133.1, 133.2 au bossage voisin. Le demi-tronçon amont 130.1 comprend une bride 131.3 qui permet de connecter la virole au bec du compresseur. Le demi-tronçon aval 130.2 comprend la surface d'appui 137 sur la paroi tubulaire 132, qui forme un profil en « T » avec la bride 131.

Dans les exemples illustrés, la surface 137 est présentée comme cylindrique mais dans un mode de réalisation non revendiqué il est également possible de prévoir tout profil pour la surface 137, notamment conique ou avec un profil complémentaire à celui des patins comme notamment une gorge externe permettant de guider des patins munis d'un pion s'étendant radialement vers l'intérieur.

## Revendications

1. Ensemble pour turbomachine axiale (2), notamment pour turboréacteur d'aéronef, l'ensemble comprenant :
- une rangée annulaire d'aubes statoriques (126) avec chacune une pale (142) et une tête radiale (134, 148, 154) contenant un tourillon cylindrique (134) ; les aubes (126) étant orientables par pivotement autour de l'axe du tourillon (138) ;
- un dispositif d'actionnement (136, 140, 166, 168, 170) du pivotement des aubes (126) comprenant une bague de synchronisation (140) et des bielles de manœuvre (136) reliant la bague de synchronisation (140) à chacune des aubes (126) ;
- une virole externe (130, 230) comprenant une paroi tubulaire et présentant une rangée annulaire d'orifices radiaux (139) pour recevoir les têtes (134, 148, 154) des aubes (126) ;
la virole (130, 230) comprenant deux tronçons (130, 230) tubulaires axialement adjacents, les tronçons (130, 230) étant assemblés au moyen de brides (131, 231) respectives, **caractérisé en ce que** le premier tronçon (130) comprend une surface cylindrique (137) coaxiale au tronçon (130) et forme un siège pour le dispositif d'actionnement (136, 140, 166, 168, 170), et **en ce que** la surface cylindrique (137) est une surface externe d'une paroi tubulaire (132) chevauchant axialement les deux brides (131, 231).

2. Ensemble selon la revendication 1, **caractérisé en ce que** la paroi tubulaire (132) et la bride (131) du premier tronçon (130) forment un profil en « T ».

3. Ensemble selon l'une des revendications 1 ou 2, **caractérisé en ce que** la paroi tubulaire (132) et la bride (131) du premier tronçon (130) sont venus de matière.

4. Ensemble selon l'une des revendications 1 à 3, **caractérisé en ce qu'**il comprend des patins (166) fixés à la bague (140) et venant au contact de la surface cylindrique (137).

5. Ensemble selon la revendication précédente, **caractérisé en ce qu'**il comprend des manchons (170) comprenant chacun une portion tubulaire (172) pour coopérer avec une tige (168) ou avec la bague (140), et une portion rectangulaire (174) ou cylindrique pour coopérer avec un patin (166).

6. Ensemble selon l'une des revendications 1 à 5, **caractérisé en ce qu'**il comprend une pluralité de couples vis-écrous, les brides (131, 231) comprenant des orifices pouvant être traversés par les vis pour maintenir les tronçons (130, 230) entre eux par assemblage vissé.

7. Ensemble selon la revendication précédente, caractérisé en que les orifices sont axiaux et les écrous sont parallèles à la surface cylindrique (137).

8. Ensemble selon l'une des revendications 1 à 7, **caractérisé en ce qu'**au moins une de brides (131, 231) et/ou la paroi tubulaire (132) et/ou les tronçons (130, 230) est/sont composés d'un alliage de titane, d'aluminium ou de magnésium et/ou de matériau composite.

9. Ensemble selon l'une des revendications 1 à 8, **caractérisé en ce que** le premier tronçon (130) est réalisé à partir d'un assemblage de deux demi-tronçons (130.1, 130.2), chacun des demi-tronçons (130.1, 130.2) comprenant une rangée annulaire de demi-orifices (139.1, 139.2) radiaux semi-cylindriques ; les demi-orifices (139.1, 139.2) étant agencés pour permettre à chacun des demi-orifices (139.1, 139.2) d'un demi-tronçon (130.1, 130.2) d'être mis en correspondance axiale et circonférentielle avec un demi-orifice (139.1, 139.2) de l'autre demi-tronçon (130.1, 130.2) pour former la rangée annulaire d'orifices radiaux (139).

10. Ensemble selon la revendication précédente, **caractérisé en ce que** les demi-tronçons (130.1, 130.2) sont assemblés à l'aide de brides (131.1, 131.2) respectives positionnées circonférentiellement entre deux demi-orifices adjacents (139.1, 139.2), chaque espacement circonférentiel entre deux demi-orifices (139.1, 139.2) adjacents contenant une des brides (131.1, 131.2).

11. Ensemble selon l'une des revendications 1 à 10, **caractérisé en ce que** les brides (131, 231) sont des flancs s'étendant perpendiculairement à l'axe (114) de symétrie de la virole et ayant une épaisseur axiale (E1, E2), la surface cylindrique (137) s'étendant axialement sur une longueur (L) de plus de trois fois la somme des épaisseurs axiales (E1, E2) des deux brides (131, 231).

12. Turbomachine axiale (2), notamment un turboréacteur d'aéronef, avec un compresseur basse-pression (4), un compresseur haute-pression (6) et une veine intermédiaire entre le compresseur basse-pression (4) et le compresseur haute-pression (6), **caractérisée en ce que** le compresseur basse-pression (4), la veine intermédiaire et/ou le compresseur haute-pression (6) comprend/comprennent un ensemble selon l'une des revendications 1 ou 11.

## Patentansprüche

1. Eine Baugruppe für eine Axialturbomaschine (2), insbesondere für Flugzeug-Turbotriebwerke, wobei die Baugruppe Folgendes umfasst:
- eine ringförmige Anordnung von Statorschaufeln (126), die jeweils eine Schaufel (142) und einen radialen Kopf (134, 148, 154) aufweisen, der eine zylindrische Nabe (134) enthält; wobei die Schaufeln (126) um die Nabenachse (138) schwenkbar sind;
- eine Betätigungsvorrichtung (136, 140, 166, 168, 170) zum Schwenken der Schaufeln (126), die einen Synchronisierungsring (140) und Betätigungsstangen (136) umfasst, die den Synchronisierungsring (140) mit jeder der Schaufeln (126) verbinden;
- einen äußeren Ring (130, 230), der eine rohrförmige Wand umfasst und eine ringförmige Anordnung von Radialöffnungen (139) aufweist, in die die Enden (134, 148, 154) der Schaufeln (126) eingreifen,
wobei der Ring (130, 230) zwei axial benachbarte rohrförmige Abschnitte (130, 230) umfasst, wobei die Abschnitte (130, 230) mittels entsprechender Flansche (131, 231) zusammengefügt sind, **dadurch gekennzeichnet, dass** der erste Abschnitt (130) eine zylindrische Fläche (137) aufweist, die koaxial zu dem Abschnitt (130) ist und eine Aussparung für das Betätigungselement (136, 140, 166, 168, 170) bildet, und dadurch, dass die zylindrische Fläche (137) eine Außenfläche einer rohrförmigen Wand (132) ist, die die beiden Flansche (131, 231) axial überlappt.

2. Die Baugruppe nach Anspruch 1, **dadurch gekennzeichnet, dass** die rohrförmige Wand (132) und der Flansch (131) des ersten Abschnitts (130) ein "T"-Profil bilden.

3. Die Baugruppe nach einem der Ansprüche 1 oder 2, **dadurch gekennzeichnet, dass** die rohrförmige Wand (132) und der Flansch (131) des ersten Abschnitts (130) aus einem Stück gefertigt sind.

4. Die Baugruppe nach einem der Ansprüche 1 bis 3, **dadurch gekennzeichnet, dass** sie Schuhe (166) umfasst, die an dem Ring (140) befestigt sind und mit der zylindrischen Fläche (137) in Kontakt kommen.

5. Die Baugruppe nach dem vorhergehenden Anspruch, **dadurch gekennzeichnet, dass** sie Hülsen (170) umfasst, die jeweils einen rohrförmigen Teil (172) für das Zusammenwirken mit einer Stange (168) oder einem Ring (140) und einen rechteckigen (174) oder zylindrischen Teil für das Zusammenwirken mit einem Schuh (166) aufweisen.

6. Die Baugruppe nach einem der Ansprüche 1 bis 5, **dadurch gekennzeichnet, dass** sie eine Vielzahl von Schrauben-Bolzen-Paaren umfasst, wobei die Flansche (131, 231) Öffnungen aufweisen, durch die die Bolzen hindurchgehen können, um die Abschnitte (130, 230) durch Verschraubung zusammenzuhalten.

7. Die Baugruppe nach dem vorhergehenden Anspruch, **dadurch gekennzeichnet, dass** die Löcher axial sind und die Muttern parallel zur zylindrischen Oberfläche (137) sind.

8. Die Baugruppe nach einem der Ansprüche 1 bis 7, **dadurch gekennzeichnet, dass** mindestens einer der Flansche (131, 231) und/oder die rohrförmige Wand (132) und/oder die Abschnitte (130, 230) aus einer Titan-, Aluminium- oder Magnesiumlegierung und/oder einem Verbundwerkstoff hergestellt ist/sind.

9. Die Baugruppe nach einem der Ansprüche 1 bis 8, **dadurch gekennzeichnet, dass** der erste Abschnitt (130) aus einer Baugruppe von zwei Halbabschnitten (130.1, 130.2) hergestellt ist, wobei jeder der Halbabschnitte (130.1, 130.2) eine ringförmige Anordnung von halbzylindrischen radialen Halböffnungen (139.1, 139.2) aufweist, wobei die Halböffnungen (139.1, 139.2) so angeordnet sind, dass jede der Halböffnungen (139.1, 139.2) eines Halbabschnitts (130.1, 130.2) in axiale und umfängliche Übereinstimmung mit einer Halböffnung (139.1, 139.2) des anderen Halbabschnitts (130.1, 130.2) gebracht werden kann, um die ringförmige Reihe von Radialöffnungen (139) zu bilden.

10. Die Baugruppe nach dem vorhergehenden Anspruch, **dadurch gekennzeichnet, dass** die Halbabschnitte (130.1, 130.2) mittels jeweiliger Flansche (131.1, 131.2) zusammengefügt werden, die in Umfangsrichtung zwischen zwei benachbarten Halblöchern (139.1, 139.2) angeordnet sind, wobei jeder Umfangsabstand zwischen zwei benachbarten Halblöchern (139.1, 139.2) einen der Flansche (131.1, 131.2) enthält.

11. Die Baugruppe nach einem der Ansprüche 1 bis 10, **dadurch gekennzeichnet, dass** die Flansche (131, 231) senkrecht zur Symmetrieachse (114) der Hülse verlaufende Flansche mit einer axialen Dicke (E1, E2) sind, wobei sich die zylindrische Fläche (137) axial über eine Länge (L) erstreckt, die größer ist als das Dreifache der Summe der axialen Dicken (E1, E2) der beiden Flansche (131, 231).

12. Eine Axialturbomaschine (2), insbesondere Flugzeug-Turbotriebwerk, mit einem Niederdruckverdichter (4), einem Hochdruckverdichter (6) und einem Zwischenkanal zwischen dem Niederdruckverdichter (4) und dem Hochdruckverdichter (6), **dadurch gekennzeichnet, dass** der Niederdruckverdichter (4), der Zwischenkanal und/oder der Hochdruckverdichter (6) eine Baugruppe nach einem der Ansprüche 1 oder 11 umfassen.

## Claims

1. Assembly for an axial turbomachine (2), in particular for an aircraft turbojet engine, the assembly comprising:
- an annular row of stator vanes (126) each with an airfoil (142) and a radial head (134, 148, 154) containing a cylindrical trunnion (134); the vanes (126) being orientable by pivoting around the axis of the trunnion (138);
- an actuating device (136, 140, 166, 168, 170) for pivoting the vanes (126) comprising a synchronization ring (140) and operating rods (136) connecting the synchronization ring (140) to each vane (126);
- an outer shroud (130, 230) comprising a tubular wall and having an annular row of radial orifices (139) for receiving the heads (134, 148, 154) of the vanes (126);
the shroud (130, 230) comprising two axially adjacent tubular sections (130, 230), the sections (130, 230) being assembled by means of respective flanges (131, 231), **characterized in that** the first section (130) comprises a cylindrical surface (137) coaxial with the section (130) and forms a seat for the actuating device (136, 140, 166, 168, 170), and **in that** the cylindrical surface (137) is an external surface of a tubular wall (132) axially overlapping the two flanges (131, 231).

2. The assembly of claim 1, **characterized in that** the tubular wall (132) and the flange (131) of the first section (130) form a "T"-shaped cross section.

3. The assembly of one of claims 1 or 2, **characterized in that** the tubular wall (132) and the flange (131) of the first section (130) are integrally made.

4. The assembly of one of claims 1 to 3, **characterized in that** it further comprises pads (166) fixed to the ring (140) and coming into contact with the cylindrical surface (137).

5. The assembly of the preceding claim, **characterized in that** it comprises sleeves (170), each of which comprising a tubular portion (172) for cooperating with a rod (168) or with the ring (140); and a rectangular portion (174) or cylindrical portion to cooperate with a pad (166).

6. The assembly of one of claims 1 to 5, **characterized in that** it comprises a plurality of screw-nut pairs, the flanges (131, 213) comprising orifices which can be traversed by the screws to maintain the sections (130, 230) fixed together by a screw-nut connection.

7. The assembly of the preceding claim, **characterized in that** the orifices are axially oriented and are such that the nuts are parallel to the cylindrical surface (137).

8. The assembly of one of claims 1 to 7, **characterized in that** at least one of the flanges (131, 231) and/or the tubular wall (132) and/or the sections (130, 230) is/are composed of an alloy of titanium, aluminium, or magnesium, and/or composite material.

9. The assembly of one of claims 1 to 8, **characterized in that** the first section (130) is constituted by an assembly of two half-sections (130.1, 130.2), each of the half-sections (130.1, 130.2) comprising an annular row of semicylindrical radial half-orifices (139.1, 139.2), the half-orifices (139.1, 139.2) being arranged to allow each of the half-orifices (139.1, 139.2) of a half-section (130.1, 130.2) to be brought into axial and circumferential correspondence with a half-orifice (139.1, 139.2) of the other half-section (130.1, 130.2) to form the annular row of radial orifices (139).

10. The assembly of the preceding claim, **characterized in that** the half-sections (130.1, 130.2) are assembled using respective half-section flanges (13.1, 131.2) positioned circumferentially between two adjacent half-orifices (139.1, 139.2), wherein each circumferential spacing between two adjacent half-orifices (139.1, 139.2) contains one of the respective half-section flanges (131.1, 131.2).

11. The assembly of one of claims 1 to 10, **characterized in that** the flanges (131, 231) are flanks extending perpendicular to an axis of symmetry (114) of the shroud and having an axial thickness (E1, E2), the cylindrical surface (137) extending axially over a length (L) of more than three times the sum of the axial thicknesses (E1, E2) of the two flanges (131, 231).

12. Axial turbomachine (2), in particular an aircraft turbojet, with a low-pressure compressor (4), a high-pressure compressor (6) and an intermediate passage between the low-pressure compressor (4) and the high compressor pressure (6), **characterized in that** the low-pressure compressor (4), the intermediate passage and/or the high-pressure compressor (6) comprises/comprise an assembly according to one of claims 1 to 11.
